# EUROPÄISCHE PATENTSCHRIFT

(11) **EP 1 331 159 B1**
(45) Veröffentlichungstag und Bekanntmachung des Hinweises auf die Patenterteilung: **20.02.2008**
(21) Anmeldenummer: 02027339.7
(22) Anmeldetag: 07.12.2002
(51) Int. Cl.: B62D 21/15

(54) **Aufbaustruktur eines Kraftfahrzeugs**
Frame structure for a motor vehicle
Structure de châssis pour véhicule automobile

(30) Priorität: 26.01.2002 DE 10202984
(43) Veröffentlichungstag der Anmeldung: 30.07.2003
(73) Patentinhaber: Dr.Ing. h.c. F. Porsche Aktiengesellschaft, 70435 Stuttgart (DE)
(72) Erfinder: Stoffels, Oliver, 71634 Ludwigsburg (DE); Meier, Thomas, 76287 Rheinstetten (DE)

(56) Entgegenhaltungen:
- WO-A-00/31344
- WO-A-99/32346
- DE-A- 4 104 894

## Beschreibung

Die Erfindung bezieht sich auf eine Aufbaustruktur eines Kraftfahrzeugs, insbesondere Personenwagens nach dem Oberbegriff des Patentanspruchs 1.

Eine derartige Aufbaustruktur für ein Kraftfahrzeug ist aus der DE 30 38 920 A1 bekannt, die ein sich zwischen einem Bug und einer Querwand einer Fahrgastzelle erstreckendes Tragsystem aufweist. Das Tragsystem umfasst jeweils außerhalb einer Mittellängsebene des Kraftfahrzeugs angeordnete aufrechte über die gesamte Höhe eines Vorderwagens verlaufende Wände, wobei jede Wand ein Innenteil und ein Außenteil und zur kollisionsbedingten Energieabsorption - in Fahrzeughöhenrichtung gesehen - zwei übereinanderliegende Deformationshohlträger umfasst.

Die US 3,819,224 behandelt einen Vorderwagen eines Kraftfahrzeugs, der pro Fahrzeuglängsseite, und zwar innerhalb von Rädern einen oberen Längsträger und einen unteren Längsträger besitzt. Diese Längsträger sind von Aufbaubereichen, die einer Fahrgastzelle benachbart sind, weggeführt und münden in gabelförmige Abschnitte von Aufnahmeträgern, die mit freien Enden zu einem Stoßfänger hin ausgerichtet sind.

Aufgabe der Erfindung ist es, Deformationselemente für einen Aufbau eines Kraftfahrzeugs zu schaffen, die bei gezielter Energieabsorption eine einfache Konstruktion aufweisen und sich leicht in eine Aufbaustruktur integrieren lassen.

Nach der Erfindung wird diese Aufgabe durch die Merkmale des Patentanspruchs 1 gelöst. Die Aufnahmeplatte mit den Aufnahmevorrichtungen stellt eine wirkungsvolle Verbindung zu den Deformationshohlträgern und auch zu der Querplatte der Fahrgastzelle her. Weitere, die Erfindung ausgestaltende Merkmale sind in den Unteransprüchen enthalten. Die mit der Erfindung hauptsächlich erzielten Vorteile sind darin zu sehen, dass die drei Deformationshohlträger des Deformationselement im Falle einer Havarie funktionsgerecht Energie absorbieren. Dabei zeichnet sich das so gestaltete Deformationselement durch leichte Austauschbarkeit z. B. in verformtem Zustand und übersichtliche Bauweise aus, wobei für seine Integration in eine Aufbaustruktur bzw.

Verbindung mit einer Fahrgastzelle lediglich übliche Maßnahmen erforderlich sind. Dass die Deformationshohlträger und die Stege durch zusammengesetzte Halbschalen gebildet werden, trägt zur kostengünstigen Herstellung des Deformationselement bei.

In der Zeichnung wird ein Ausführungsbeispiel der Erfindung gezeigt, das nachstehend näher beschreiben ist.

### Es zeigen

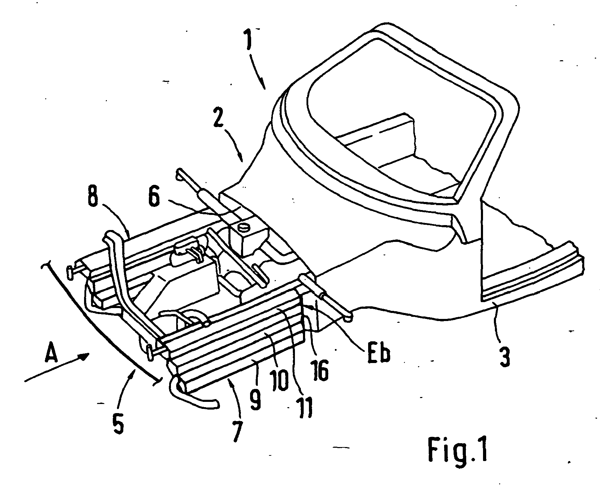

Fig. 1 eine Schrägansicht einer Aufbaustruktur mit Deformationselementen, die sich zwischen einem Bugendbereich und einer Fahrgastzelle erstrecken,

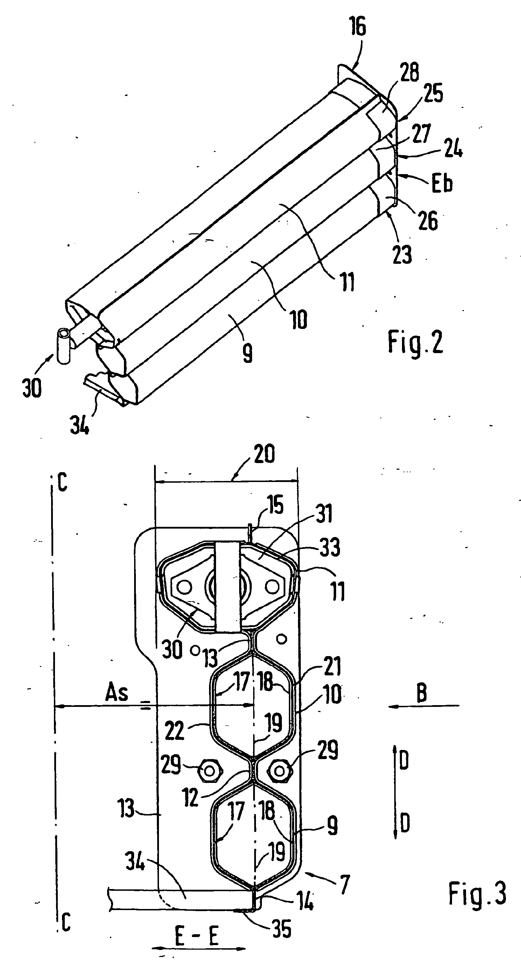

Fig. 2 eine Schrägansicht eines Deformationselementes,

Fig. 3 ein Ansicht in Pfeilrichtung A der Fig. 2,

Fig. 4 eine Ansicht in Pfeilrichtung B der Fig. 3.

Von einem Kraftfahrzeug 1, bspw. der zweisitzigen Gattung eines Personenwagens, ist lediglich eine Aufbaustruktur 2 mit einer formsteifen Fahrgastzelle 3 und einem Bugendbereich 4 angedeutet. Die Fahrgastzelle 3 besteht vorzugsweise aus einem nicht metallischen Verbundwerkstoff, wie er z. B. in der US 4,573,707 beschrieben ist, und sie wird auf der dem Bugendbereich zugekehrten Seite von einer Querwand 5 begrenzt, an die ein Bugraum 6 anschließt. Die Aufbaustruktur 2 ist mit Deformationselementen 7 und 8 versehen, die mit gleichem Abstand As zu einer Fahrzeuglängsmittelebene C-C verlaufen, z.B. aus Metall bestehen und sich zwischen dem Bugendbereich 5 und der Querwand 6 erstrecken. Jedes Deformationselement u.a. 7 umfasst drei in Fahrzeughöhenrichtung D-D gesehen übereinanderliegende Deformationshohlträger d.h. einen ersten unteren Deformationshohlträger 9, einen zweiten mittleren Deformationshohlträger 10 und einen dritten oberen Deformationshohlträger 11. Die Deformationshohlträger 9,10 und 11 sind mittels relativ kurzer Stege 12 und 13 untereinander verbunden. Zusätzlich sind von dem ersten unteren Deformationshohlträger 9 und von dem dritten oberen Deformationshohlträger 11 noch weitere kurze Stege 14 bzw. 15 weggeführt, die wie die Stege 12 und 13 in Fahrzeughöhenrichtung D-D verlaufen. Um das Deformationselement 7 an der Querwand zu befestigen ist es in ihrem dem Bugendbereich abgekehrten Endbereich Eb mit einer Aufnahmeplatte 16 versehen.

Im Ausführungsbeispiel weisen der erste untere Deformationshohlträger 9 und der zweite mittlere Deformationshohlträger 10 im Querschnitt gesehen zwei zusammengesetzte Trapeze 17 und 18 auf, deren längere Seiten 19 in Fahrzeughöhenrichtung D-D verlaufen. Durch diese Ausbildung ist der Querschnitt der Deformationshohlträger 9 und 10 sechseckig. Im Gegensatz dazu ist der dritte obere Deformationshohlträger 11 achteckig ausgebildet, wobei eine längere Seite 20 des Querschnitts in Fahrzeugquerrichtung E-E verläuft.

Zur Herstellungsvereinfachung werden die Deformationshohlträger 9,10 und 11 und die Stege 12,13 und 14,15 durch Schalen, vorzugsweise zwei Halbschalen 21 und 22 gebildet, die an den Stegen 12,13 und 14,15 zusammengesetzt sowie durch geeignete Verfahren u.a. Schweißen miteinander verbunden sind.

Die Aufnahmeplatte 16 ist mit Aufnahmevorrichtungen 23, 24 und 25 für die Deformationshohlträger 17,18 und 19 versehen. Die Aufnahmevorrichtungen 23, 24 und 25 werden durch kragenartige Flansche 26,27 und 28 gebildet, die die Deformationshohlträger 9,10 und 11 zumindest abschnittsweise formschlüssig umgeben. Die Flansche 26,27 und 28 und die Deformationshohlträger 9,10 und 11 werden durch geeignete Verbindungsmaßnahmen wie Kleben, Schweißen oder dgl. in Lage gehalten. Außerdem ist das Deformationselement 7 mittels der Aufnahmeplatte 16 und unter Vermittlung von Schrauben 29 lösbar bzw. austauschbar z.B. nach einer durch einen Unfall hervorgerufenen Verformung gehalten.

Der dritte obere Deformationshohlträger 11 ist zur Aufnahme eines Pralldämpfers 30 ausgebildet. Hierzu ist in diesen Deformationshohlträger 11 ein Einsatz 31 eingebracht, der zur Befestigung des Pralldämpfers 30 dient. Der Einsatz 31 liegt mit einem Flansch 32 an einer Innenseite 33 an.

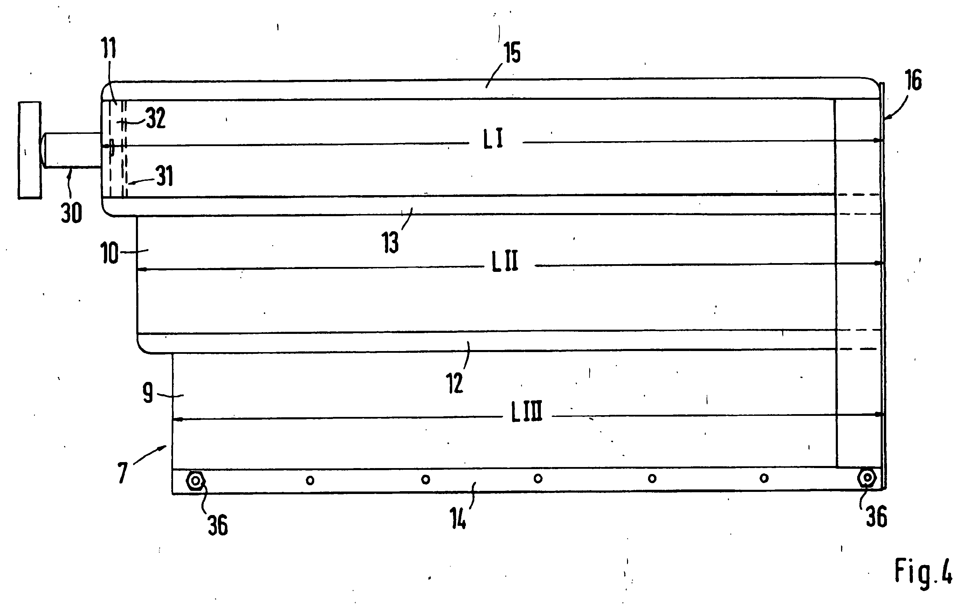

Gemäß Fig.4 weisen die Deformationshohlträger 9,10 und 11 unterschiedliche Längen LI, L II und L III auf. Dabei ist die Länge L III des dritten oberen Deformationshohlträgers 11 größer als die Länge L II des zweiten mittleren Deformationshohlträgeres 10 und die Länge L II des mittleren Deformationshohlträgers L II ist größer als die Läge L I des unteren Deformationshohlträgers 9. Durch diese Gestaltung wird eine gestufte Energieabsorption der Deformationshohlträger 9,10 und 11 erreicht.

Schließlich ist zwischen den Deformationselementen 7,8 eine ebene Stützplatte 34 aus Metall oder Verbundwerkstoff vorgesehen, die sich zwischen den Stegen 14 der besagten Deformationselementen erstreckt und auf horizontalen Flanschen 35 der Stege 14 aufliegen. Zur Befestigung der Stützplatte 34 an den Stegen 14 dienen eine oder mehrere Schrauben 36.

## Patentansprüche

1. Aufbaustruktur eines Kraftfahrzeugs, insbesondere Personenwagens, der mit im Abstand zu einer Fahrzeuglängsmittelebene verlaufenden Deformationselementen bspw. aus Metall versehen ist, welche Deformationselemente mehrere in Fahrzeughöhenrichtung übereinanderliegende Deformationshohlträger aufweisen und sich zwischen einem Bugendbereich sowie einer formsteifen Fahrgastzelle erstrecken, wobei jedes Deformationselement (7 oder 8) einen ersten unteren Deformationshohlträger (9), einen zweiten mittleren Deformationshohlträger (10) und einen dritten oberen Deformationshohlträger (11) besitzt, die relativ kurze Stege (12 und 13) verbinden, **dadurch gekennzeichnet, dass** die Deformationshohlträger (9, 10 und 11) in ihrem dem Bugendbereich (5) abgekehrten Endbereich (Eb) unter Vermittlung einer Aufnahmeplatte (16) mit einer Querwand (6) der Fahrgastzelle (3) verbunden sind, wobei die Aufnahmeplatte (16) des Deformationselements (7) mit Aufnahmevorrichtungen (23, 24 und 25) für die Deformationshohlträger (9, 10 und 11) versehen ist, wobei die Aufnahmevorrichtungen (23, 24 und 25) durch von der Aufnahmeplatte (16) weggeführte kragenartige Flansche (26, 27 und 28) gebildet werden, die zumindest abschnittsweise die Deformationshohlträger (9, 10 und 11) formschlüssig umgeben.

2. Aufbaustruktur nach Anspruch 1, **dadurch gekennzeichnet, dass** zumindest der erste untere Deformationshohlträger (9) und der zweite mittlere Deformationshohlträger (10) im Querschnitt gesehen durch zwei zusammengesetzte Trapeze (17 und 18) gebildet werden, deren längere Seiten (19) im wesentliche in Fahrzeughöhenrichtung (D-D) verlaufen.

3. Aufbaustruktur nach Anspruch 1 oder 2, **dadurch gekennzeichnet, dass** der dritte obere Deformationshohlträger (11) im Querschnitt vieleckig ausgebildet ist, wobei eine längere Seite (20) des Querschnitts in Fahrzeugquerrichtung (E-E) verläuft.

4. Aufbaustruktur nach Anspruch 3, **dadurch gekennzeichnet, dass** der dritte obere Deformationshohlträger (11) im Querschnitt achteckig ausgebildet ist.

5. Aufbaustruktur nach einem oder mehreren der vorangehenden Ansprüchen, **dadurch gekennzeichnet, dass** die Deformationshohlträger (9, 10 und 11) und die Stege (12, 13 und 14, 15) durch Schalen, beispielsweise Halbschalen (21 und 22) gebildet werden.

6. Aufbaustruktur nach Anspruch 5, **dadurch gekennzeichnet, dass** die Halbschalen (21 und 22) an den Stegen (12, 13 und 14, 15) zusammengesetzt und durch Kleben, Schweißen oder dgl. miteinander verbunden sind.

7. Aufbaustruktur nach Anspruch 1, **dadurch gekennzeichnet, dass** die Deformationshohlträger (9, 10 und 11) und die Flansche (26, 27 und 28) der Aufnahmeplatte (16) durch geeignete Verbindungsmaßnahmen wie Kleben, Schweißen oder dgl. miteinander verbunden sind.

8. Aufbaustruktur nach einem oder mehreren der vorangehenden Ansprüche, **dadurch gekennzeichnet, dass** beispielsweise der dritte obere Deformationshohlträger (11) zur Aufnahme eines Pralldämpfers (30) ausgebildet ist.

9. Aufbaustruktur nach Anspruch 8, **dadurch gekennzeichnet, dass** in eine Innenseite (33) des dritten oberen Deformationshohlträgers (11) ein Einsatz (31) eingebracht ist, der zur Befestigung des Pralldämpfers (30) dient.

10. Aufbaustruktur nach Anspruch 9, **dadurch gekennzeichnet, dass** der Einsatz (31) mit einem Flansch (32) an der Innenseite (33) Deformationshohtträgers (11) anliegt.

11. Aufbaustruktur nach einem oder mehreren der vorangehenden Ansprüche **dadurch gekennzeichnet, dass** das Deformationselement (7) mittels der Aufnahmeplatte (16) und unter Vermittlung von Schrauben (29) an der Querwand (6) der Fahrgastzelle (3) austauschbar gehalten ist.

## Claims

1. Frame structure for a motor vehicle, in particular passenger vehicle, which is provided with deformation elements, for example made of metal, which run at a distance from a vehicle longitudinal centre plane, which deformation elements have a plurality of hollow deformation supports which lie one above another in the vertical direction of the vehicle and extend between a front end region and a dimensionally rigid passenger cell, each deformation element (7 or 8) having a first lower hollow deformation support (9), a second central hollow deformation support (10) and a third upper hollow deformation support (11) which connect relatively short webs (12 and 13), **characterized in that** the hollow deformation supports (9, 10 and 11) are connected in their end region (Eb), which faces away from the front end region (5), to a transverse wall (6) of the passenger cell (3) with the use of a receiving plate (16), the receiving plate (16) of the deformation element (7) being provided with receiving devices (23, 24 and 25) for the hollow deformation supports (9, 10 and 11), and the receiving devices (23, 24 and 25) being formed by collar-like flanges (26, 27 and 28) which are guided away from the receiving plate (16) and at least in some sections surround the hollow deformation supports (9, 10 and 11) in a form-fitting manner.

2. Frame structure according to Claim 1, **characterized in that** at least the first lower hollow deformation support (9) and the second central hollow deformation support (10) are formed, as seen in cross section, by two assembled trapezia (17 and 18), the longer sides (19) of which run essentially in the vertical direction (D-D) of the vehicle.

3. Frame structure according to Claim 1 or 2, **characterized in that** the third upper hollow deformation support (11) is of polygonal design in cross section, with a longer side (20) of the cross section running in the transverse direction (E-E) of the vehicle.

4. Frame structure according to Claim 3, **characterized in that** the third upper hollow deformation support (11) is of octagonal design in cross section.

5. Frame structure according to one or more of the preceding claims, **characterized in that** the hollow deformation supports (9, 10 and 11) and the webs (12, 13 and 14, 15) are formed by shells, for example half shells (21 and 22).

6. Frame structure according to Claim 5, **characterized in that** the half shells (21 and 22) are assembled on the webs (12, 13 and 14, 15) and are connected to each other by adhesive bonding, welding or the like.

7. Frame structure according to Claim 1, **characterized in that** the hollow deformation supports (9, 10 and 11) and the flanges (26, 27 and 28) of the receiving plate (16) are connected to one another by suitable connecting measures, such as adhesive bonding, welding or the like.

8. Frame structure according to one or more of the preceding claims, **characterized in that**, for example, the third upper hollow deformation support (11) is designed to receive an impact damper (30).

9. Frame structure according to Claim 8, **characterized in that** an insert (31) which serves for the fastening of the impact damper (30) is placed into an inside (33) of the third upper hollow deformation support (11).

10. Frame structure according to Claim 9, **characterized in that** the insert (31) bears with a flange (32) against the inside (33) of the hollow deformation support (11).

11. Frame structure according to one or more of the preceding claims, **characterized in that** the deformation element (7) is held in an interchangeable manner on the transverse wall (6) of the passenger cell (3) by means of the receiving plate (16) and with the use of screws (29).

## Revendications

1. Structure de carrosserie d'un véhicule automobile, notamment d'une voiture particulière, qui est pourvue d'éléments de déformation en métal par exemple s'étendant à distance d'un axe médian longitudinal du véhicule, lesquels éléments de déformation présentent plusieurs supports creux de déformation superposés dans la direction de la hauteur du véhicule et s'étendent entre une région terminale avant et un habitacle indéformable, sachant que chaque élément de déformation (7 ou 8) possède un premier support creux de déformation inférieur (9), un deuxième support creux de déformation médian (10) et un troisième support creux de déformation supérieur (11), qui relient des entretoises (12 et 13) relativement courtes, **caractérisée en ce que** les supports creux de déformation (9, 10 et 11), dans leur région terminale (Eb) opposée à la région terminale avant (5), sont reliés à une cloison transversale (6) de l'habitacle (3) par l'intermédiaire d'une plaque réceptrice (16), sachant que la plaque réceptrice (16) de l'élément de déformation (7) est pourvue de dispositifs récepteurs (23, 24 et 25) pour les supports creux de déformation (9, 10 et 11), sachant que les dispositifs récepteurs (23, 24 et 25) sont formés par des brides du genre collets (26, 27 et 28) s'éloignant de la plaque réceptrice (16), qui entourent au moins sectoriellement les supports creux de déformation (9, 10 et 11) en engagement positif.

2. Structure de carrosserie selon la revendication 1, **caractérisée en ce qu'**au moins le premier support creux de déformation inférieur (9) et le deuxième support creux de déformation médian (10) sont formés, considérés dans leur section, par deux trapèzes assemblés (17 et 18) dont les grands côtés (19) s'étendent essentiellement dans la direction (D-D) de la hauteur du véhicule.

3. Structure de carrosserie selon la revendication 1 ou 2, **caractérisée en ce que** le troisième support creux de déformation supérieur (11) est réalisé de section polygonale, sachant qu'un grand côté (20) de la section s'étend dans la direction transversale (E-E) du véhicule.

4. Structure de carrosserie selon la revendication 3, **caractérisée en ce que** le troisième support creux de déformation supérieur (11) est réalisé de section octogonale.

5. Structure de carrosserie selon une ou plusieurs des revendications précédentes, **caractérisée en ce que** les supports creux de déformation (9, 10 et 11) et les entretoises (12, 13 et 14, 15) sont formés par des coques, par exemple des demi-coques (21 et 22).

6. Structure de carrosserie selon la revendication 5, **caractérisée en ce que** les demi-coques (21 et 22) sont réunies au niveau des entretoises (12, 13 et 14, 15) et assemblées entre elles par collage, soudage ou analogue.

7. Structure de carrosserie selon la revendication 1, **caractérisée en ce que** les supports creux de déformation (9, 10 et 11) et les brides (26, 27 et 28) de la plaque réceptrice (16) sont mutuellement assemblés par des mesures d'assemblage appropriées telles que collage, soudage ou analogue.

8. Structure de carrosserie selon une ou plusieurs des revendications précédentes, **caractérisée en ce que** le troisième support creux de déformation supérieur (11) par exemple est conçu pour recevoir un amortisseur de chocs (30).

9. Structure de carrosserie selon la revendication 8, **caractérisée en ce qu'**une pièce d'insertion (31), qui sert à fixer l'amortisseur de chocs (30), est mise en place dans un côté intérieur (33) du troisième support creux de déformation supérieur (11).

10. Structure de carrosserie selon la revendication 9, **caractérisée en ce que** la pièce d'insertion (31) s'applique avec une bride (32) contre le côté intérieur (33) du support creux de déformation (11).

11. Structure de carrosserie selon une ou plusieurs des revendications précédentes, **caractérisée en ce que** l'élément de déformation (7) est maintenu avec possibilité de remplacement sur la cloison transversale (6) de l'habitacle (3) au moyen de la plaque réceptrice (16) et à l'aide de vis (29).
